Europäisches Patentamt

European Patent Office

Office européen des brevets

(11) Publication number: **0 111 130**
**B1**

## EUROPEAN PATENT SPECIFICATION

(45) Date of publication of patent specification: 08.07.87　　(51) Int. Cl.⁴: **G 06 F 3/153**

(21) Application number: **83110684.4**

(22) Date of filing: **26.10.83**

(54) **Multi-terminal data processing system.**

(30) Priority: **03.12.82 US 446725**

(43) Date of publication of application:
**20.06.84 Bulletin 84/25**

(45) Publication of the grant of the patent:
**08.07.87 Bulletin 87/28**

(84) Designated Contracting States:
**DE FR GB IT**

(56) References cited:
**GB-A-1 449 142**
**GB-A-2 052 210**

**COMPUTERS & GRAPHICS, vol. 3, no. 4, 1978, pages 129-134, Pergamon Press Ltd., (GB); W. SAWCHUK et al.: "An interactive image communication system using narrowband lines"**

**IBM TECHNICAL DISCLOSURE BULLETIN, vol. 23, no. 6, November 1980, pages 2464/5, New York (USA); R.L. ARNDT et al.: "Backup terminal provides extra capability during normal operation of multi-terminal transaction-processing system"**

(73) Proprietor: **International Business Machines Corporation**
**Old Orchard Road**
**Armonk, N.Y. 10504 (US)**

(72) Inventor: **Kelly, Keith F., Jr.**
**4034 Hockaday**
**Dallas Texas 75229 (US)**

(74) Representative: **Bonin, Jean-Jacques Compagnie IBM France Département de Propriété Intellectuelle**
**F-06610 La Gaude (FR)**

(56) References cited:
**IBM TECHNICAL DISCLOSURE BULLETIN, vol. 19, no. 5, October 1976, page 1916, New York (USA); J.W. BRYNER: "Multiple display synchronization"**

**IBM TECHNICAL DISCLOSURE BULLETIN, vol. 22, no. 10, March 1980, pages 4586-4590, New York (USA); H.Y. JULIUSBURGER et al.: "Multi-peer access loop communication system"**

EP 0 111 130 B1

## Description

This invention relates to data processing systems in which terminals having a keyboard and a display are connected through a host central processing unit and rendered interactive such that the display screen contents of all the terminals are the same at all times.

In a multi-terminal data processing system or network, each user is allocated address space in the memory of the host central processing unit for private file storage. Access to the allocated address space is by a procedure known as "logging on" or, more simply, by the command LOGON. An address space normally will only have one user logged on. The logon normally occurs from a terminal which has been conditioned by the system to contain a fill-in-the-blanks display screen for the user identification, password and other identification.

There are a number of support and educational applications where it is desirable for one user already logged on to add another terminal to his address space. For example, if a user is experiencing difficulty in running a software application, he may wish to add a second terminal at a remote location so that a customer engineer could assist the user in debugging the application. As another example, it is often useful for training purposes to add a second terminal so that personnel can be easily taught how to use a particular software application. In both of these examples, it is desirable that the second terminal logged on to the address space display the same output of the first terminal so that the person using the second can observe exactly what output that address space is generating.

In the past, this has been done by informing the user of the terminal to be added of the user identification and password belonging to the user of the primary terminal. The user of the second terminal then simply logs on using this information. The article entitled "An interactive image communication system using narrowband lines" published in Computers and Graphics, Vol. 3, No 4, 1978, pages 129—134, and GB—A—2052210, suggest such a system.

In some cases, it may not be desirable to provide the user of the second terminal with the user identification and password since divulging this information can compromise the security of the allocated address space. The method according to the present invention fulfills that requirement.

According to the present invention as claimed, a terminal is added to the address space of the primary terminal by the user of the primary terminal first conditioning the address space to accept multiple terminals. This is accomplished by inputting the SET command followed by a space then the SIMUL command followed by a space then the number of terminals that are to be allowed access to the address space. Once the address space has been conditioned to accept multiple terminals, a second terminal can be coupled to the primary terminal without informing the person on the terminal about to be added of the user identification or password. This is accomplished by a process of terminal coupling whereby the LOGON command is used by a user of a terminal already logged on to add another terminal to his address space. The terminal to be added must have been previously conditioned to contain a fill-in-the-blanks logo and currently not be logged on. This preconditioning of the terminal to be added is done by communicating with the system component that processes such logos in the central processing unit where the terminal is connected. The connection of the added terminal is by means of an intraprocess connection of pipeline and is implemented at a low enough level that applications programs are not aware of its existence and see the same environment as they do when one user is logged on.

In the attached drawings:

Figure 1 is a block diagram illustrating a hypothetical configuration of a multi-terminal, multi-processor system or network.

Figure 2 is a flow diagram of the system software component for allocating address space to a terminal.

Figure 2A is a flow diagram of the system software component for unallocating address space to a terminal.

Figure 3 is a flow diagram of the address space software for logging on a terminal.

Figure 4 is a flow diagram of the address space software for unallocating a terminal from the address space.

Figure 5 is a flow diagram of the I/O code for multiple displays from the flow diagram of Figure 3.

Figure 5A is a flow diagram of the I/O code when a terminal is unallocated from the address space.

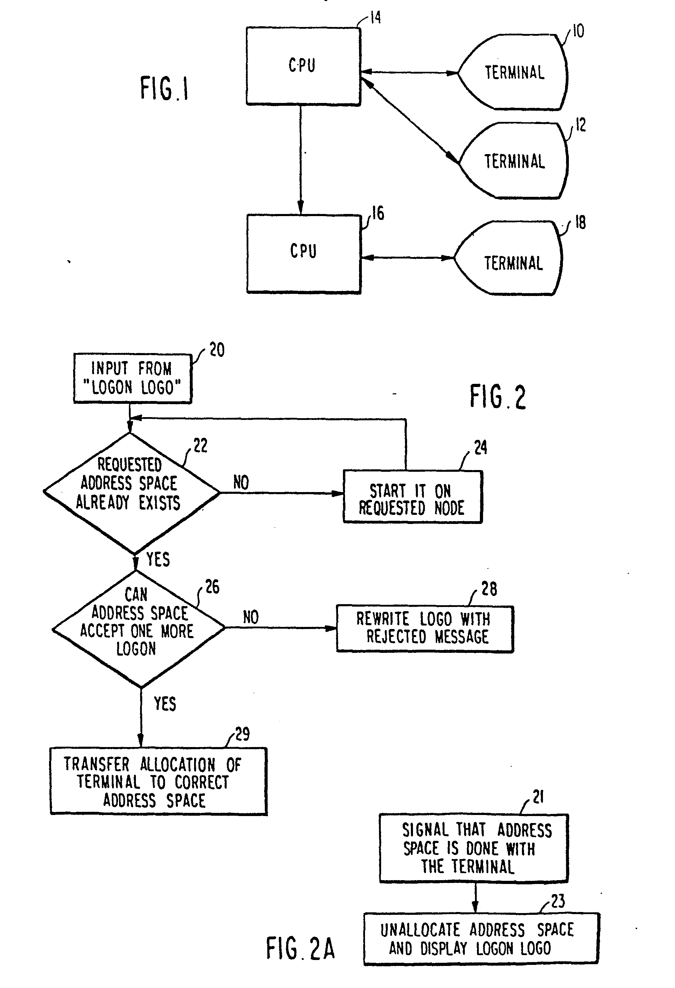

Referring now to the drawings, and more particularly to Figure 1, the invention can be practiced with two or more terminals 10 and 12 connected to the same host central processing unit (CPU) 14, but this is not a necessary condition. For example, in a multiprocessor system represented by CPUs 14 and 16 connected in a peer-to-peer network, the coupled terminal can be connected to a different CPU than the primary terminal as indicated by the terminal 18 connected to the CPU 16. For purpose of illustration, assume that the primary terminal is terminal 10 and the operator requires assistance in debugging an application. The user of terminal 10 first conditions his address space to accept multiple terminals, in this case two terminals, by inputting the following:

SET space SIMUL space 2

A customer engineer in another city using terminal 18 can now be logged on to the address space assigned to the user of terminal 10. This would probably be done by the user of terminal 10 using the LOGON command so that user identification and password would not have to be communicated. Terminal 18 must be previously conditioned to contain a fill-in-the-blanks logo and not be currently logged on. The fill-in-the-blanks logo is provided to terminal 18 in response to a request communicated to the system component that processed such logos in CPU 16 to which terminal 18 is connected. Once logged on the user of terminal 18 is able to observe exactly what output the address space is generating. In this way, no information is miscommunicated as would be possible in a telephone relay. This greatly facilitates the assistance that the customer engineer can provide the user of terminal 10.

Another possibility illustrated in Figure 1 is the case where the user of terminal 10 desires training in a particular software application. In this situation, the coupled terminal might be terminal 12 which is connected to the same CPU 14 as terminal 10. In fact, the two terminals may even have the same geographical situs, but this of course is not necessary. The procedure for logging on terminal 12 to the address space assigned to the user of terminal 10 can be exactly the same.

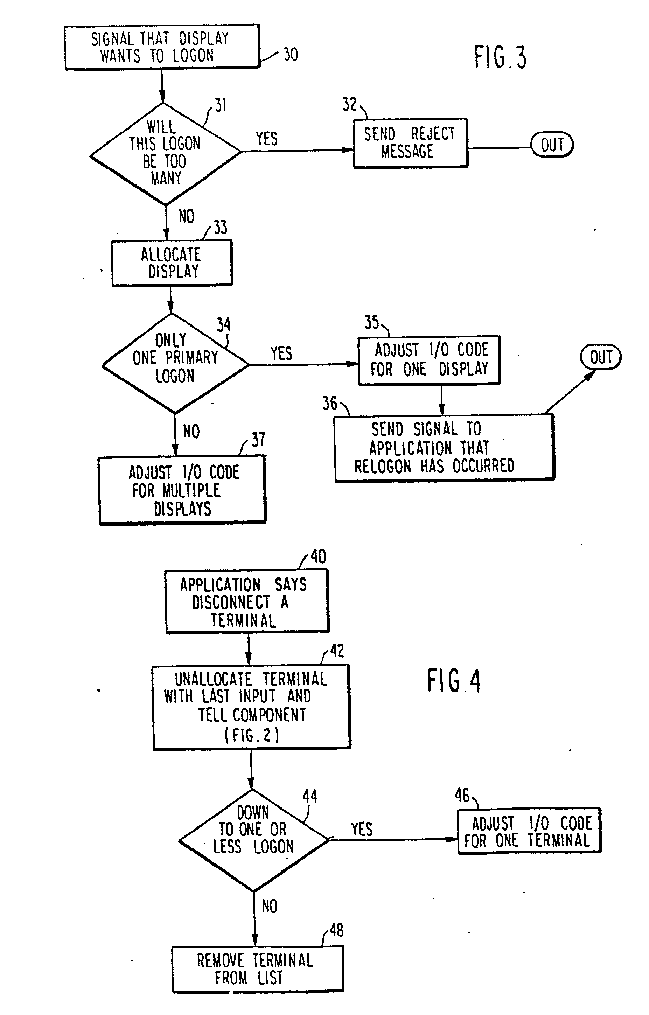

The system level flow diagram for allocating address space is shown in Figure 2. The program begins when an input is received from the LOGON logo as indicated in block 20. Then in decision block 22, it is determined whether the requested address space already exists. If it does not, a job number or other identification is assigned and the address space is created in block 24 and the program returns to the input to decision block 22. Having found that the address space exists, it is next determined whether the requested address space can accept one more log on in decision block 26. If not, the LOGON logo is rewritten on the terminal display with a reject message in block 28 and the program ends. Assuming that the address space can accept one more log on, then the terminal will be allocated the requested address space.

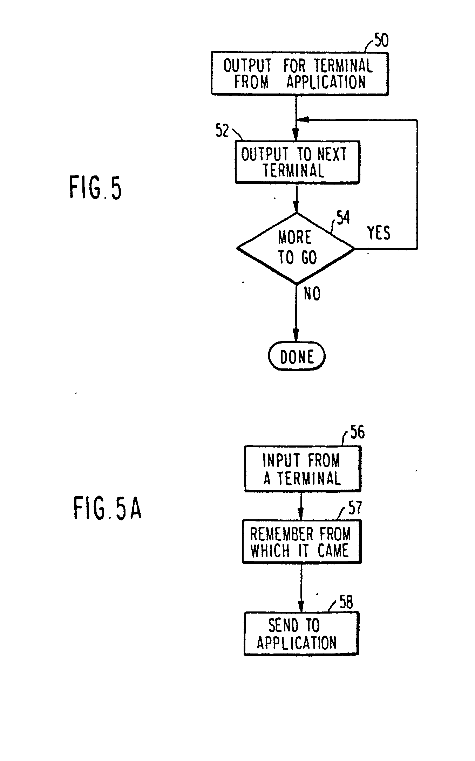

Figure 3 is the flow diagram at the address space level for logging on a terminal and can be considered as a subprogram of decision block 26 in Figure 2. In block 30 a signal is received that a terminal wants to log on. Decision block 31 determines if this log on will be too many, and if it is, a reject message is sent in block 32 and the program ends. On the other hand, a negative answer in decision block 31 will result in allocation of the terminal in block 33. Since the same procedure is followed in an initial log on as when a second or third terminal is added, a determination must be made in decision block 34 whether this log on is a primary log on. If it is, then the input/output (I/O) code is adjusted for one terminal in block 35. Next, a signal is sent to the application that a log on or relog on has occurred in block 36 and the program ends. Thus, in the case of only one primary log on, the program is in all respects similar to the normal situation where only one user is logged on to an address space. However, in the case where a second or third terminal are to be logged on to the address space of the primary terminal, the I/O code is adjusted for multiple display in block 37. In block 35, when I/O occurs, it goes directly from or to the terminal by way of a direct logical connection. But in block 37, when I/O occurs, it goes to system code in the address space so that the connection is via an intraprocess connection or pipeline as shown in Figure 5.

In Figure 5, an output of the terminal display from the application is provided at block 50. In block 52, this output is provided to the next terminal, beginning of course with the first or primary terminal. If it is determined in decision block 54 that there are additional terminals logged on, then the output of the terminal display is provided to the next terminal and so on until the terminal displayed has been provided to all the terminals which have been logged on.

After a session has been completed or one of the operators wants to disconnect his terminal, the system procedure is shown in Figure 2A. A signal is received in block 21 that the address space is done with that particular terminal. As a result, in block 23 the address space is unallocated and the LOGON logo is put back up on the terminal's display.

Figure 4 is the flow diagram at the address space level for the disconnect procedure. In block 40 a signal is received from the application saying that the terminal is to be disconnected. The terminal having the last input is unallocated and the system component in Figure 2A is so notified in block 42. Next, in decision block 44, it is determined whether the disconnection of the last terminal results in the system having one or less terminals logged on. If that should be the case, the I/O code is adjusted for one terminal in block 46. It will be recalled that this is just the opposite of the procedure illustrated in Figure 3 with respect to the log on of an additional terminal. On the other hand, if there remain more than one terminal logged on, then in block 48 the terminal just unallocated is removed from the display list. This process is shown in Figure 5A.

In Figure 5A, the input indicating a disconnect is received from the terminal in block 56. In block 57, the logical connection number assigned to the terminal when I/O code was adjusted for multiple terminals is remembered and this information is sent to the application in block 58. In this way, only the terminal requesting disconnection is unallocated.

From the foregoing, it will be appreciated that the process of terminal coupling according to the invention allows a user to cause another terminal to be logged on to the first user's address space without informing the user of the other terminal to be logged on to the first user's identification or password.

**Claims**

1. Method of coupling terminals in a multi-terminal data processing system including a first and at least one further terminal (10, 12), each having a keyboard and a display and being connected to a host central processing unit (14), wherein the same address space is allocated to said first terminal and thereafter to said further terminal so that the terminals become interactive with one another and display the same screen contents, characterized in that

said same address space is allocated to said further terminal (12) under control of said first terminal (10) without informing the further terminal's user of the identification or password of the first terminal's user.

2. Method according to Claim 1 characterized in that said further terminal (12) is preconditioned with a fill-in-the-blanks logo in response to a request communicated to the system component that processed such logos in the host processing unit (14), to assist the user of said further terminal in completing a proper logging on operation to said processing unit.

## Patentansprüche

1. Methode, um Datenendstationen in einem eine Vielzahl von Datenendstationen umfassenden Datenverarbeitsungsystem zusammenzukoppeln, wobei das genannte Datenverarbeitungssystem eine erste und zumindest eine weitere Datenendstation aufweist, die jeweils mit einer Tastatur une einer Darstellungsmöglichkeit (10, 12) ausgerüstet und mit einer Zentralprozessoreinheit (14) verbunden sind, in welcher derselbe Adressierungsbereich der genannten ersten und anschliessend der weiteren Datenendstation zugeteilt ist, so dass diese Datenendstationen untereinander dialogieren und denselben Bildschirminhalt darstellen können, dadurch gekennzeichnet, dass

der genannte selbe Adressierungsbereich unter Kontrolle der genannten ersten Datenendstation (10) der genannten weiteren Datenendstation (12) übermittelt wird ohne dass die anderen Datenendstationbenutzer über die Identifizierung oder das Kennwort des ersten Datenendstationbenutzers informiert werden.

2. Methode nach Anspruch 1, dadurch gekennzeichnet, dass die genannte weitere Datenendstation (12) mit einer Logotype zum Füllen der leeren Stellen vorkonditioniert ist als Antwort auf eine Anfrage, die dem Systemkomponenten, der solche Logotypen in der Zentralprozessoreinheit (14) verarbeitete, übermittelt wurde, um den Benutzer der genannten weiteren Datenendstation mit einem richtigen Aufschaltvorgang auf die genannte Prozessoreinheit zu unterstützen.

## Revendications

1. Méthode de connexion de terminaux dans un système de traitement de données à terminaux multiples comprenant un premier et au moins un autre terminal (10, 12) comprenant chacun un clavier et un dispositif d'affichage et étant connectés à une unité de traitement centrale principale (14), dans laquelle le même espace d'adresses est attribué audit premier terminal et ensuite audit autre terminal de façon que les terminaux deviennent interactifs l'un avec l'autre et affiche le même contenu à l'écran, caractérisé en ce que:

ledit même espace d'adresses est attribué audit autre terminal (12) sous la commande dudit premier terminal (10) sans informer l'utilisateur de l'autre terminal de l'identification ou mot de passe de l'utilisateur du premier terminal.

2. Méthode selon la revendication 1 caractérisée en ce que ledit autre terminal (12) est préconditionné avec un logo de remplissage des blanc en réponse à une demande communiquée au composant du système qui a traité ces logos dans l'unité de traitement centrale (14), pour assister l'utilisateur dudit autre terminal à achever une opération d'appel appropriée à ladite unité de traitement.

**FIG.1**

CPU `14`

TERMINAL `10`

TERMINAL `12`

CPU `16`

TERMINAL `18`

**FIG.2**

INPUT FROM "LOGON LOGO" `20`

REQUESTED ADDRESS SPACE ALREADY EXISTS `22`

NO → START IT ON REQUESTED NODE `24`

YES

CAN ADDRESS SPACE ACCEPT ONE MORE LOGON `26`

NO → REWRITE LOGO WITH REJECTED MESSAGE `28`

YES

TRANSFER ALLOCATION OF TERMINAL TO CORRECT ADDRESS SPACE `29`

SIGNAL THAT ADDRESS SPACE IS DONE WITH THE TERMINAL `21`

UNALLOCATE ADDRESS SPACE AND DISPLAY LOGON LOGO `23`

**FIG.2A**

**0 111 130**

FIG.3

SIGNAL THAT DISPLAY
WANTS TO LOGON — 30

WILL
THIS LOGON
BE TOO
MANY — 31

YES → SEND REJECT
MESSAGE — 32 → OUT

NO

ALLOCATE
DISPLAY — 33

ONLY
ONE PRIMARY
LOGON — 34

YES → ADJUST I/O CODE
FOR ONE DISPLAY — 35

SEND SIGNAL TO
APPLICATION THAT
RELOGON HAS OCCURRED — 36 → OUT

NO

ADJUST I/O CODE
FOR MULTIPLE
DISPLAYS — 37

APPLICATION SAYS
DISCONNECT A
TERMINAL — 40

UNALLOCATE TERMINAL
WITH LAST INPUT AND
TELL COMPONENT
(FIG.2) — 42

FIG.4

DOWN
TO ONE OR
LESS LOGON — 44

YES → ADJUST I/O CODE
FOR ONE TERMINAL — 46

NO

REMOVE TERMINAL
FROM LIST — 48

2

FIG.5

```
                                    ┌─50
        ┌──────────────────────┐
        │  OUTPUT  FOR TERMINAL │
        │  FROM   APPLICATION   │
        └──────────────────────┘
                    │
                    ▼
   52 ┌──────────────────────┐◄──────┐
      │  OUTPUT  TO NEXT      │       │
      │    TERMINAL          │       │
      └──────────────────────┘       │
                    │                 │
                    ▼       ┌─54      │
                   ◆                  │
                  MORE      YES       │
                  TO GO ───────────────┘
                   ◆
                    │ NO
                    ▼
                ( DONE )
```

FIG.5A

```
                         ┌─56
    ┌──────────────────┐
    │   INPUT FROM      │
    │   A TERMINAL      │
    └──────────────────┘
              │      ┌─57
              ▼
    ┌──────────────────┐
    │  REMEMBER FROM    │
    │  WHICH IT CAME    │
    └──────────────────┘
              │      ┌─58
              ▼
    ┌──────────────────┐
    │   SEND TO         │
    │   APPLICATION     │
    └──────────────────┘
```